(19) Europäisches Patentamt

European Patent Office

Office européen des brevets

(11) Veröffentlichungsnummer : **0 349 776 B1**

(12) **EUROPÄISCHE PATENTSCHRIFT**

(45) Veröffentlichungstag der Patentschrift :
**12.02.92 Patentblatt 92/07**

(51) Int. Cl.⁵ : **B25B 27/30**

(21) Anmeldenummer : **89110248.5**

(22) Anmeldetag : **07.06.89**

(54) **Druckfedernspanner.**

(30) Priorität : **07.07.88 DE 3823041**

(43) Veröffentlichungstag der Anmeldung :
**10.01.90 Patentblatt 90/02**

(45) Bekanntmachung des Hinweises auf die
Patenterteilung :
**12.02.92 Patentblatt 92/07**

(84) Benannte Vertragsstaaten :
**AT BE CH ES FR GB GR IT LI NL SE**

(56) Entgegenhaltungen :
**EP-A- 0 271 782**
**EP-A- 0 299 880**
**GB-A- 2 017 561**
**US-A- 2 980 397**

(73) Patentinhaber : **Klann, Horst**
**Terra-Wohnpark 12**
**W-7730 Villingen-Schwenningen 24 (DE)**

(72) Erfinder : **Klann, Horst**
**Terra-Wohnpark 12**
**W-7730 Villingen-Schwenningen 24 (DE)**

(74) Vertreter : **Neymeyer, Franz, Dipl.-Ing. (FH)**
**Haselweg 20**
**W-7730 Villingen 24 (DE)**

EP 0 349 776 B1

Jouve, 18, rue Saint-Denis, 75001 PARIS

**Beschreibung**

Die Erfindung betrifft einen Druckfedernspanner, insbesondere für Achsfedern von Kraftfahrzeugen, bestehend aus einem zylindrischen Führungsrohr mit einer drehbar darin gelagerten Gewindespindel und zwei Greiferklammern, wobei die eine Greiferklammer mittels eines ersten das Führungsrohr umschließenden Hülsenteils festsitzend am einen Ende des Führungsrohres befestigt ist und die andere Greiferklammer an einem zweiten das Führungsrohr mit Schiebepaßsitz umschließenden, axial beweglichen Hülsenteil befestigt ist, welcher durch einen Radialfinger, der einen am einen Ende offenen Axialschlitz des Führungsrohres durchragt, mit einem axial verschiebbar an der Innenfläche des Führungsrohres geführten und durch ein Innengewinde mit der Gewindespindel in Eingriff stehenden Gleitstein verbunden ist.

Bei einem bekannten Druckfedernspanner dieser Art (DE-PS 28 13 381) ist das zylindrische Führungsrohr mit zwei sich diametral gegenüberliegenden Axialschlitzen versehen, durch welche jeweils Radialfinger des Gleitsteins radial nach außen ragen, die sich jeweils an einer Querschulter des Hülsenteils abstützen. Diese Querschultern werden jeweils von Ausnehmungen gebildet, welche die gleiche Breite haben, wie die Radialfinger und die Axialschlitze. Während die Mitnahme des beweglichen Hülsenteils vom Gleitstein in der Spannrichtung einer zu spannenden Feder durch das Aufliegen der Querschultern des Hülsenteiles auf den Radialfingern des Gleitsteines erfolgt, ist zum Bewirken einer Mitnahme des beweglichen Hülsenteils in entgegengesetzter Richtung der eine Radialfinger durch eine angeschraubte Lasche mit dem Hülsenteil verbunden. Diese Verbindung stellt bei dem bekannten Druckfedernspanner insofern eine Schwachstelle dar, als beim maschinellen Antrieb der Gewindespindel in Entspannungsrichtung einer eingespannten Feder die Schraubverbindungen zwischen der Lasche einerseits und dem Radialfinger des Gleitsteins bzw. zwischen der Lasche und dem Hülsenteil andererseits immer dann zu Bruch gehen, wenn durch Unachtsamkeit die sich in Richtung des Spindelkopfes bewegende Greiferklammer beim Entspannen einer in ein Fahrzeug eingebauten Feder gegen einen festen Widerstand, z.B. gegen den unteren Federaufnahmeteller läuft und die Spindel trotzdem weitergedreht wird. Dies macht häufig umständliche Reparaturarbeiten notwendig, die in der Regel mit einem Auswechseln sowohl des Gleitsteins als auch des Hülsenteils verbunden ist.

Weitere Schwachpunkte des bekannten Druckfedernspanners, die häufig zur Unbrauchbarkeit und zur Notwendigkeit einer Reparatur führen, sind in der Lagerung der Gewindespindel im Führungsrohr gegeben. Die Gewindespindel weist nämlich an ihren beiden Enden jeweils glatte, im Durchmesser verjüngte zylindrische Abschnitte auf, mit denen sie jeweils in einem Axialdrucklager gelagert ist. Dabei ist die Gewindespindel am winkelkopffernen Ende durch einen Querstift, der auf eine bestimmte axiale Scherkraft ausgelegt ist, und somit eine Sollbruchstelle bildet, am dort angeordneten Axialdrucklager abgestützt, während am gegenüberliegenden Endabschnitt ein Schlüsselkopf mit der Gewindespindel verstiftet ist. Die Stiftverbindung zwischen dem Schlüsselkopf und der Gewindespindel soll zwar auch als Sollbruchstelle dienen und zwar für den Fall, daß die Gewindespindel auch dann noch in Entspannungsrichtung weitergedreht wird, wenn die bewegliche Greiferklammer in Entspannungsrichtung auf einem festen Widerstand aufläuft und der Abstand zwischen den beiden Greiferklammern nicht mehr vergrößert werden kann. In der Praxis hat sich jedoch gezeigt, daß auch eine solche Sollbruchstelle, wenn sie tatsächlich zu Bruch geht eine umständliche, zeitraubende und damit teure Reparatur nach sich ziehen kann.

Der Erfindung liegt die Aufgabe zugrunde, bei einem Druckfedernspanner der gattungsgemäßen Art mit einfachen, keinen größeren Materialaufwand und keinen größeren Raumbedarf erfordernden Mitteln die Reparaturanfälligkeit durch Erhöhung seiner Bruchfestigkeit zu vermindern.

Gelöst wird diese Aufgabe erfindungsgemäß dadurch, daß der einstückig am Gleitstein angeformte Radialfinger eine von der Mantelfläche des vollen Durchwessen des Gleitsteins gemessene radiale Länge aufweist, die höchstens der doppelten Wanddicke des Führungsrohres entspricht und in eine radiale Ausnehmung des Hülsenteils ragt, die ihn sowohl in beiden Axialrichtungen, als auch in beiden Drehrichtungen mit geringem Spiel umschließt.

Der Hauptvorteil, der dabei erzielt wird, ist darin zu sehen, daß durch das formschlüssige Eingreifen des Radialfingers in die Ausnehmung des Hülsenteils sowohl eine Verdrehsicherung des Hülsenteils in den beiden Drehrichtungen, als auch eine zwangsläufige Mitnahme des Hülsenteils durch den Gleitstein in beiden Axialrichtungen erfolgt, ohne daß zusätzliche, besonders bruchgefährdete Verbindungsmittel erforderlich sind. Die beim bekannten Druckfedernspanner erforderliche Lasche mit den dazugehörigen Schrauben, welche den Hülsenteil mit dem Gleitstein verbinden, entfallen. Die Belastbarkeit der Verbindung zwischen dem Gleitstein und dem Hülsenteil ist in beiden Axialrichtungen gleich groß.

Durch die nach Anspruch 2 vorgesehene Anordnung der Ausnehmung in Hülsenteil des Radialfingers und des Axialschlitzes können die von den Federspannkräften verursachten Kippmomente am Gleitstein am kleinsten gehalten werden. Unterstützt wird dieser Vorteil auch durch die Ausgestaltung des Anspruches 3.

Durch die Ausgestaltung der Erfindung nach Anspruch 4 wird einerseits die an der Innenfläche des Führungsrohres anliegende Mantelfläche des Gleitsteines in einer reibungsvermindernden Weise verkleinert, ohne daß dadurch die Führungseigenschaften beeinträchtigt werden und es wird außerdem der Vorteil erzielt, daß die Übergänge von den Außenflächen des Radialfingers in die Zylinderfläche des Gleitsteinkörpers in Übergangsradien versehen werden können, die ebenfalls zur Erhöhung der Bruchfestigkeit an diesen Stellen beitragen.

Um auch die mit der Lagerung der Gewindespindel zusammenhängende Bruchfestigkeit zu erhöhen und um zugleich auf einfache Weise eine in axialer Richtung nahezu spielfreie Lagerung der Gewindespindel zu erzielen, sind die Ausgestaltungen der Erfindung nach den Ansprüchen 5 und 6 vorgesehen. Dabei ist der Ausführungsform, bei welcher der Flansch einstückig an der Gewindespindel angeformt und der Schlüsselkopf mit ihr verschraubt und/oder verschweißt ist, den Vorzug zu geben.

Durch die Ausgestaltung der Erfindung nach Anspruch 7 wird sichergestellt, daß unter Ausnutzung des maximalen Spannhubes eine besonders gute Gleitführung zwischen dem Gleitstein und dem Hülsenteil einerseits und dem Führungsrohr andererseits gegeben ist.

Durch die Ausgestaltung der Erfindung nach Anspruch 8 wird die Montage insbesondere der Gewindespindel im Führungsrohr mit ihrem gemäß Anspruch 6 vorgesehenen Axialdrucklager begünstigt bzw. erst möglich. Durch die gemäß Anspruch 9 vorgesehene ringförmige Greiferklammer ist auch die Möglichkeit gegeben, mit dieser einen Federteller aufzunehmen, in dem ein Ende einer zu spannenden Feder liegt.

Anhand der Zeichnung wird im folgenden ein Ausführungsbeispiel der Erfindung näher erläutert. Es zeigt:

Fig. 1 einen Druckfedernspanner im Schnitt;

Fig. 2 den spindelkopffernen Endabschnitt des Führungsrohres und der Gewindespindel im Schnitt;

Fig. 3 ein Schnitt III-III aus Fig. 1;

Fig. 4 den beweglichen Hülsenteil im Schnitt;

Fig. 5 eine Stirnansicht V aus Fig. 4;

Fig. 6 den Gleitstein in Seitenansicht und

Fig. 7 einen Schnitt VII-VII aus Fig. 6.

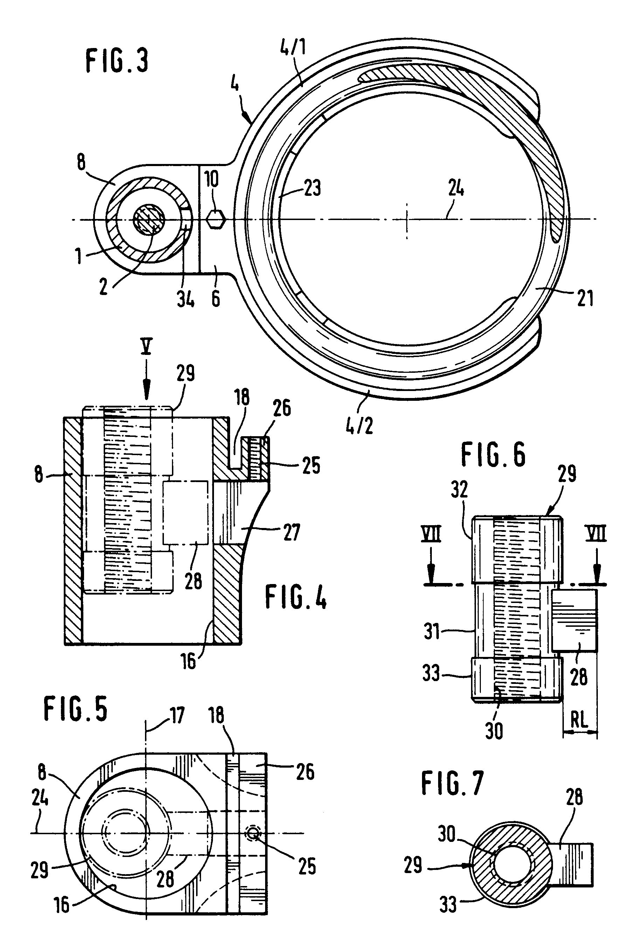

Der in der Zeichnung dargestellte Druckfedernspanner besteht aus einem zylindrischen Führungsrohr 1, einer darin drehbar gelagerten Gewindespindel 2 sowie aus zwei Greiferklammern 3 und 4, die jeweils durch hakenförmige Verbindungsprofile 5 bzw. 6 an einem ersten Hülsenteil 7 bzw. an einem zweiten Hülsenteil 8 mittels Schrauben 9 bzw. 10 befestigt sind. Der Hülsenteil 7 ist an dem in der Zeichnung oben liegenden Endabschnitt des Führungsrohres 1 axial festsitzend zwischen zwei in Ringnuten 11 bzw. 12 befestigten Sicherungsscheiben 13 und 14 angeordnet und mittels eines Nutenkeils 15 gegen Drehung gesichert. Dabei umschließt der Hülsenteil 7 die Mantelfläche des Führungsrohres 1 mit einem spielfreien Paßsitz, so daß zwischen dem Hülsenteil 7 und dem Führungsrohr 1 eine starre, praktisch spielfreie Verbindung besteht. In seiner axialen Ansicht von unten hat der Hülsenkörper 7 die gleiche Querschnittsform wie der Hülsenkörper 8 in der Darstellung der Fig. 5; d.h. er besteht aus einem einstückigen Metallkörper mit einer zylindrischen Bohrung 16, welche mit Paßsitz das Führungsrohr 1 aufnimmt und der auf der der Greiferklammer 3 abgewandten Seite eine halbzylindrische Form aufweist, während der Teil des Körpers, der auf der der Greiferklammer 3 zugekehrten Seite der Symmetrieebene 17 der Bohrung 16 angeordnet ist, die äußere Form eines Rechtecks aufweist. Auf der der Greiferklammer 4 zugekehrten Seite ist der rechteckförmige Teil des Hülsenkörpers 7 mit einer rechteckig profilierten, parallel zur Symmetrieebene 17 verlaufenden Nut 18 versehen, die formschlüssig einen Quersteg 19 der Greiferklammer 3 aufnimmt.

Die Greiferklammer 3 hat die Form eines in sich geschlossenen, L-förmig profilierten Ringes mit einer relativ weiten, kreisförmigen Durchgangsöffnung 20, so daß sie von oben auf einen das Ende einer zu spannenden Druckfeder 21 aufnehmenden Federteller 22 aufgesetzt werden kann, während sich innerhalb der Druckfeder 21 noch ein den Federteller 22 nach oben durchragender Stoßdämpfer angeordnet ist. Dabei ist es zweckmäßig, die Innenringfläche der Greiferklammer 3 mit mehreren im Durchmesser unterschiedlichen Zentrierstufen zu versehen, damit mit derselben Greiferklammer unterschiedlich große Federteller zentriert aufgenommen werden können.

Die gegenüberliegende untere Greiferklammer 4 ist hufeisenförmig ausgebildet und hat zwei Schenkel 4/1 und 4/2 von zumindest annähernd kreisrunder Form und einen zumindest annähernd schraubenförmigen Verlauf. Das Profil der beiden Schenkel 4/1 und 4/2 ist im wesentlichen L-förmig ausgebildet, während durch einen inneren axialen Wandabschnitt 23, der sich etwa symmetrisch zur Symmetrieebene 24 über einen Winkel von ca. 100 - 110° erstreckt, das Profil der Greiferklammer 4 teilweise U-förmig ist und somit eine sichere Aufnahme einer Federwindung der Druckfeder ermöglicht. Das hakenförmige Verbindungsprofil 6 der Greiferklammer 4 greift mit einem Quersteg 19 formschlüssig passend in die dem Hülsenteil 7 zugekehrte Quernut 18 des Hülsenteils 8 ein und ist durch die Schraube 10, die in eine Gewindebohrung 25 einer parallel zur Quernut 18 verlaufenden Querleiste 26 eingeschraubt ist, lösbar befestigt.

Die zylindrische Bohrung 16 ist so ausgeführt, daß sie das zylin d-drische Führungsrohr 1 mit einem Schiebepaßsitz leicht verschiebbar, aber doch annähernd spielfrei aufnehmen kann. Unterhalb der Quernut 18 ist etwa in der axialen Mitte der Wandung des Hülsenteils 8 eine in der Symmetrieebene 24 liegende, durchgehende, im wesentlichen rechteckförmige Ausnehmung 27 angeordnet, die zur allseits spielfreien Aufnahme eines im Profil ebenfalls rechteckigen Radialfingers 28 eines Gleitsteines 29 vorgesehen ist.

Der Gleitstein 29 hat eine zylindrische, dem Hohlprofil des Führungsrohres 1 angepaßte längliche Form und ist mit einem Innengewinde 30 versehen, in welches die Gewindespindel 2 eingeschraubt ist. Ein Mittelabschnitt 31 des Gleitsteins 29 hat einen geringeren Durchmesser als seine beiden Endabschnitte 32 und 33, deren Durchmesser auf den Innendurchmesser des Führungsrohres 1 so abgestimmt ist, daß der Gleitstein im Führungsrohr 1 eine exakte Gleitführung hat. Der Radialfinger 28 durchragt dabei einen in der Symmetrieebene 24 angeordneten Axialschlitz 34 des Führungsrohres 1, der am oberen Ende des Führungsrohres 1 offen endet und sich bis in die Nähe eines im unteren Endabschnitt des Führungsrohres 1 angeordneten und zur Lagerung der Gewindespindel 2 vorgesehenen Axialdrucklagers 35 erstreckt. Dieses Axialdrucklager 35 kann z.B. aus einem Kegelrollenlager bestehen.

Durch diesen im Durchmesser verringerten Mittelabschnitt 31, der die axiale Länge des Radialfingers 28 beidseitig überragt, wird nicht nur die Berührungsfläche zwischen dem Gleitstein 29 und dem Führungsrohr 1 und somit auch der Reibungswiderstand verringert, sondern es wird auch der Vorteil erzielt, daß die Übergänge zwischen den äußeren Begrenzungsflächen des Radialfingers 28 und der zylindrischen Mantelfläche des Gleitsteines jeweils gerundet ausgeführt werden können, so daß auch an diesen Stellen die Bruchgefahr stark verringert wird.

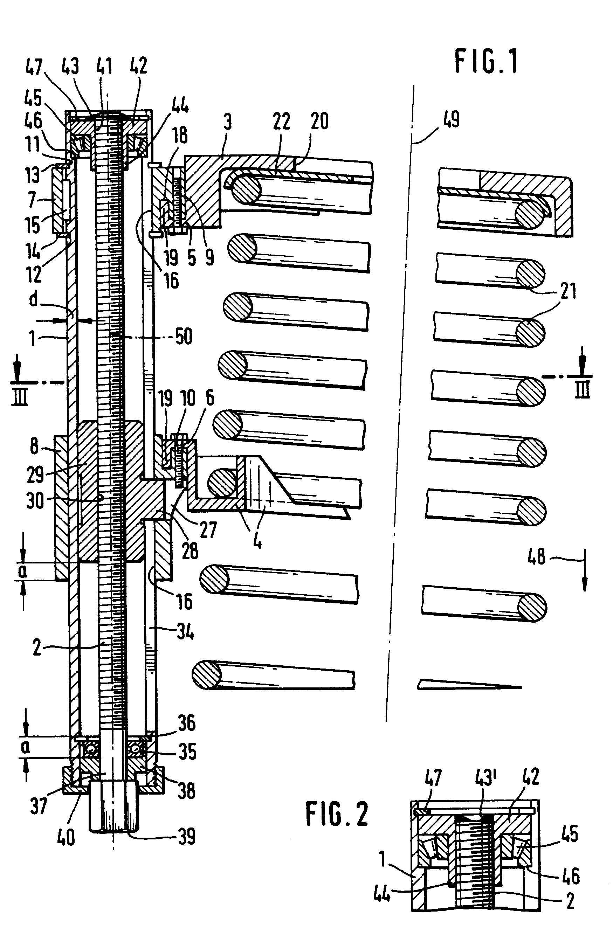

Beim Gleitstein 29 handelt es sich um ein geschmiedetes Teil, an dem der Radialfinger 28 einstückig angeformt ist. Um den Gleitstein 29 funktionsgerecht motieren zu können, ist es erforderlich, daß die von der zylindrischen Mantelfläche des vollen Durchmessers, also vom Abschnitt 33 aus, gemessene radiale Länge RL des Radialfingers 28 höchstens so groß ist wie die doppelte Wanddicke **d** des Führungsrohres 1. Dadurch ist es möglich, den Gleitstein 29 in der in Fig. 4 in strichpunktierten Linien dargestellten Weise vor dem Einführen des Führungsrohres 1 in den Hülsenteil 8 so einzusetzen, daß der Radialfinger 28 in die Ausnehmung 27 ragt. Danach kann dann unter gleichzeitiger Zentrierung des Gleitsteins 29 in der Bohrung 16 das mit dem oben offenen Axialschlitz versehene Führungsrohr 1 von unten in den Hülsenkörper 8 eingeführt werden, so daß die in Fig. 1 dargestellte Anordnung zustande kommt, bei welcher der Gleitstein im Führungsrohr 1 axial verschiebbar geführt ist, sein Radialfinger 28 durch den Axialschlitz 34 des Führungsrohres hindurch in die Ausnehmung 27 des Hülsenteils 8 formschlüssig hineinragt und bei der der Hülsenteil 8 das Führungsrohr mit einem Schiebepaßsitz spielfrei umschließt. Da auch die Breite des Radialfingers 28 und die Breite des Axialschlitzes spielfrei aufeinander abgestimmt sind, ist auch eine exakte Führung des Radialfingers 28 im Führungsrohr 1 gewährleistet.

Es ist aus Fig. 1 erkennbar, daß die axiale Länge des Hülsenteils 8 zumindest annähernd der axialen Länge des Gleitsteins 29 entspricht und daß die beiden Teile in axialer Richtung um das Maß **a** gegeneinander versetzt sind. Dieses versetzte Anordnen, durch das der Gleitstein 29 vom Axiallager 25 einen größeren Abstand aufweist als der Hülsenteil 8, führt dazu, daß durch die Anordnung des Axiallagers 35 im unteren Endbereich des Führungsrohres 1 der maximale Arbeitshub der beweglichen Greiferklammer 4 nicht verringert wird. Der axiale Versatz **a** entspricht dabei in etwa dem axialen Maß, das vom Axialdrucklager 35 und dem zugehörigen Sicherungsring 36 beansprucht wird.

Die Gewindespindel 2 ist an ihrem unteren Ende mit einem glatten zylindrischen Abschnitt 37 versehen, der den gleichen oder einen größeren Durchmesser wie bzw. als das Gewinde 2' haben kann und vom Axialdrucklager 35 und einer dieses Axialdrucklager 35 zentrierend aufnehmenden Stützhülse 38 aufgenommen ist. An diesen zylindrischen Abschnitt 37 schließt sich ein einstückig angeformter Schlüsselkopf 39 in Form eines Sechskants an, an dem zum Drehen der Gewindespindel 2 ein Werkzeug mit entsprechendem Schlüsselprofil angesetzt werden kann.

Die in Fig. 1 dargestellte, das untere Ende des Führungsrohres 1 abschließende Schraubkappe 40 wird nicht unbedingt benötigt.

Der obere Endabschnitt der Gewindespindel 2 ist in eine mit einem Innengewinde 41 versehene Flanschhülse 42 eingeschraubt und mit dieser durch eine Schweißnaht 43 drehfest verschweißt. Die Flanschhülse ist mit einer Nabe 44 versehen, die zentrierend in ein aus einem Kegelrollenlager bestehendes Axialdrucklager 45 ragt, welches seinerseits auf einer inneren Ringschulter 46 des Führungsrohres 1 stützend aufsitzt.

Die Montage erfolgt in der Weise, daß das obere Ende der Gewindespindel 2, nachdem diese durch das untere Axialdrucklager 35 und den Gleitstein 29 hindurchgeführt ist, in das Innengewinde der Flanschhülse 42 so weit eingeschraubt wird, daß der Schlüsselkopf 39 an der unteren Stirnfläche der Stützhülse 38 und die Flanschhülse 32 stirnseitig am Axialdrucklager 45 anliegt. Dann wird das stirnseitig geringfügig aus der Flanschhülse 42 herausragende Ende der Gewindespindel 2 durch die Schweißnaht 43 mit der Flanschhülse 42 verschweißt, so daß sich die Flanschhülse beim Drehen der Gewinde spindel 2 mitdreht. Dadurch ist eine axial spielfreie Lagerung der Gewindespindel 2 leicht einstellbar und erhaltbar.

Im Falle einer notwendig werdenden Reparatur kann die Schweißnaht 43 mittels einer Schleifmaschine abgeschliffen und danach die Gewindespindel 2 aus der Flanschhülse 42 herausgedreht werden. Es besteht dann die Möglichkeit, die Gewindespindel 2 an ihrem oberen Ende etwas zu kürzen, so daß sie beim erneuten Einschrauben in die Flanschhülse 42, wie in Fig. 2 dargestellt, nicht ganz deren äußere Stirnfläche erreicht und mit einer neuen, innerhalb der Gewindebohrung der Flanschhülse 42 liegenden Schweißnaht 43′ stoffschlüssig an der Flanschhülse 42 befestigt werden kann. Die oberhalb der Flanschhülse 42 in einer Ringnut sitzende Sicherheitsscheibe 47 dient nur zum axialen Sichern der Flanschhülse 42 und des Axialdrucklagers 45 während der Montage.

Falls es nun bei diesem Federnspanner vorkommt, daß bei der Drehung der Gewindespindel 2 in Entspannungsrichtung, also bei einer Axialbewegung der unteren Greiferklammer 4 in Richtung des Pfeiles 48, die Greiferklammer 4 gegen einen festen Widerstand läuft und ihr Abstand zur oberen Greiferklammer nicht mehr vergrößert werden kann, wird inkauf genommen, daß das Verbindungsprofil 6 der Greiferklammer 4 bricht. Dies führt dann lediglich zu dem Erfordernis, eine neue Greiferklammer einzusetzen. Eine Demontage und Reparatur des beweglichen Hülsenteils 8 und des Gleitsteines 29 ist dabei nicht erforderlich. Es wird dadurch eine erhebliche Arbeitsersparnis erzielt.

Aus Fig. 1 ist auch erkennbar, daß die gemeinsame Achse 49 der beiden Greiferklammern 3 nd 4 nicht parallel zur gemeinsamen Achse 50 des Führungsrohres 1 und der Gewindespindel 2 verläuft sondern schräg dazu. Der Grund dafür liegt darin, daß die nicht dargestellte Mittelachse der oberen Greiferklammer 3 vom Führungsrohr 1 einen um etwa 2,5 cm größeren Abstand hat als die Mittelachse der unteren, hufeisenförmigen Greiferklammer 4. Diese Anordnung ist erforderlich, wenn Druckfedern 21 gespannt werden müssen, welche die Form eines schiefen Kegels aufweisen.

Statt der ringförmigen Greiferklammer 3 kann an dem feststehenden Hülsenteil 7 auch eine hufeisenförmige Greiferklammer befestigt werden, die dann deckungsgleich und spiegelbildlich zur unteren Greiferklammer 4 angeordnet sein kann.

Während in der Darstellung der Fig. 1 der das Axialdrucklager 45 und die Flanschhülse 42 aufnehmende Endabschnitt des Führungsrohres 1 relativ weit aus dem Hülsenteil 7 der Greiferklammer 3 herausragt, wird in der Praxis der Hülseteil 7 so angeordnet, daß der nach oben aus dem Hülsenteil 7 herausragende Abschnitt des Führungsrohres 1 möglichst kurz ist und nur einige mm beträgt.

## Patentansprüche

1. Druckfedernspanner, insbesondere für Achsfedern von Kraftfahrzeugen, bestehend aus einem zylindrischen Führungsrohr (1) mit einer drehbar darin gelagerten Gewindespindel (2) und zwei Greiferklammern (3,4), wobei die eine Greiferklammer mittels eines ersten, das Führungsrohr umschließenden Hülsenteils (7) festsitzend am einen Ende des Führungsrohres befestigt ist und die andere Greiferklammer an einem zweiten das Führungsrohr mit Schiebepaßsitz umschließenden, axial beweglichen Hülsenteil (8) befestigt ist, welcher durch einen Radialfinger (28), der einen am einen Ende offenen Axialschlitz (34) des Führungsrohres durchragt, mit einem axial verschiebbar an der Innenfläche des Führungsrohres geführten und durch ein Innengewinde mit der Gewindespindel in Eingriff stehenden Gleitstein (29) verbunden ist, **dadurch gekennzeichnet,** daß der einstückig am Gleitstein (29) angeformte Radialfinger (28) eine von der Mantelfläche des vollen Durchmessers des Gleitsteins (29) gemessene radiale Länge (RL) aufweist, die höchstens der doppelten Wanddicke (d) des Führungsrohres (1) entspricht, und in eine radiale Ausnehmung (27) des Hülsenteils (8) ragt, die ihn sowohl in beiden Axialrichtungen als auch in beiden Drehrichtungen mit geringem Spiel umschließt.

2. Druckfedernspanner nach Anspruch 1, dadurch gekennzeichnet, daß die Ausnehmung (27) des Hülsenteils (8), der Radialfinger (28) und der Axialschlitz (34) des Führungsrohres (1) auf der den Greiferklammern (3, 4) zugekehrten Seite in der gemeinsamen Symmetrieebene (24) des Führungsrohres (1) und der Greiferklammern (3, 4) angeordnet sind.

3. Druckfedernspanner nach Anspruch 1 oder 2, dadurch gekennzeichnet, daß die Ausnehmung (27) des Hülsenteils (8) zumindest annähernd in dessen axialer Mitte angeorndet ist.

4. Druckfedernspanner nach einem der Ansprüche 1 bis 3, dadurch gekennzeichnet, daß der Gleitstein (29) einen im Durchmesser verjüngten zylindrischen Mittelabschnitt (31) aufweist, der den Radialfinger (28) in beiden Axialrichtungen überragt.

5. Druckfedernspanner nach einem der Ansprüche 1 bis 4, dadurch gekennzeichnet, daß die Gewindespindel (2) an dem mit der feststehenden Greiferklammer (3) versehenen Ende des Führungsrohres (1) mittels eines einstückig angeformten Flansches oder einer aufgeschraubten und stirnseitig mit ihr verschweißten Flanschhülse (42) in einem Axialdrucklager (45) gelagert ist, das sich in Zugrichtung der Gewindespindel auf einer Radialschulter (46) des Führungsrohres (1) abstützt.

6. Druckfedernspanner nach Anspruch 4 oder 5, dadurch gekennzeichnet, daß die Gewindespindel (2) einen aufgeschraubten und/oder mit ihr verschweißten oder einstückig angeformten Schlüsselkopf (39) aufweist und an dem von der feststehenden Greiferklammer (3) entfernten Ende des Führungsrohres (1) in einem Axialdrucklager (35) gelagert ist, das zwischen dem Schlüsselkopf (39) und einer Radialschulter oder einem Stützring (36) des Führungsrohres (1) angeordnet ist und das nur während der in Entspannungsrichtung erfolgenden Axialbewegungen des Gleitsteins (29) auf Zug belastet wird.

7. Druckfedernspanner nach Anspruch 1, dadurch gekennzeichnet, daß der Gleitstein (29) und der Hülsenteil (8) annähernd die gleiche axiale Länge aufweisen und in bzw. auf dem Führungsrohr (1) zueinander derart axial versetzt angeordnet sind, daß der Gleitstein (29) vom schlüsselkopfseitigen Ende des Führungsrohres (1) einen etwa um das axiale Maß (a) des schlüsselkopfseitigen Axiallagers (35) größeren Abstand hat als der Hülsenteil (8).

8. Druckfedernspanner nach Anspruch 5, dadurch gekennzeichnet, daß der Axialschlitz (34) des Führungsrohres (1) an dem mit der feststehenden Greiferklammer (3) versehenen Ende stirnseitig offen ist.

9. Druckfedernspanner nach Anspruch 1, dadurch gekennzeichnet, daß zur wahlweisen Befestigung insbesondere am festsitzenden Hülsenteil (7) des Führungsrohres (1) eine als geschlossener Ring mit einem L-förmigen Querschnittsprofil ausgebildete Greiferklammer (3) vorgesehen ist.

## Revendications

1. Tendeur pour ressorts de compression, pour des ressorts d'essieu de véhicules notamment, composé d'un tube de guidage cylindrique (1), dans lequel est logée une broche filetée (2), avec une possibilité de rotation, et de deux griffes (3, 4), l'une des griffes étant fixée sur une extrémité du tube de guidage, au moyen d'un premier élément de douille (7) qui enveloppe ce dernier, et l'autre griffe étant fixée sur un deuxième élément de douille (8) mobile dans le sens axial, qui enveloppe le tube de guidage avec un ajustement coulissant, et qui est assemblé par un doigt radial (28), pénétrant au travers d'une fente axiale (34) du tube de guidage, ouverte sur une extrémité, avec un coulisseau (29) guidé dans le sens axial sur la surface interne du tube de guidage, et en prise avec la broche filetée par un taraudage, caractérisé en ce que le doigt radial (28), formé d'une seule pièce sur le coulisseau (29), présente une longueur radiale (RL), mesurée à partir de l'enveloppe du diamètre intégral du coulisseau (29), qui correspond au maximum au double de l'épaisseur de paroi (d) du tube de guidage (1), ce doigt pénétrant dans un évidement radial (27) de l'élément de douille (8), qui l'enveloppe avec un jeu minime, aussi bien dans les deux sens axiaux que dans les deux sens de rotation.

2. Tendeur pour ressorts de compression suivant la revendication 1, caractérisé en ce que l'évidement (27) de l'élément de douille (8), le doigt radial (28) et la fente axiale (34) du tube de guidage (1) sont disposés sur le côté tourné vers les griffes (3, 4), dans le plan de symétrie commun (24) du tube de guidage (1) et des griffes (3, 4).

3. Tendeur pour ressorts de compression suivant l'une des revendications 1 et 2, caractérisé en ce que l'évidement (27) de l'élément de douille (8) est disposé au centre axial de ce dernier, à peu près du moins.

4. Tendeur pour ressorts de compression suivant l'une quelconque des revendications 1 à 3, caractérisé en ce que le coulisseau (29) présente une section centrale cylindrique (31), diamétralement rétrécie, qui dépasse le doigt radial (28) dans les deux sens axiaux.

5. Tendeur pour ressorts de compression suivant l'une quelconque des revendications 1 à 4, caractérisé en ce que la broche filetée (2) est logée dans une butée axiale (45), sur l'extrémité du tube de guidage (1) munie de la griffe fixe (3), au moyen d'une bride formée d'une seule pièce ou d'une douille à bride (42), vissée et soudée à la broche, côté frontal, la butée s'appuyant sur un épaulement radial (46) du tube de guidage (1), dans le sens de traction de la broche filetée.

6. Tendeur pour ressorts de compression suivant l'une des revendications 4 et 5, caractérisé en ce que la broche filetée (2) présente une tête polygonale (39), avec laquelle elle est vissée et/ou soudée, ou formée d'une seule pièce, et est logée dans une butée axiale (35), sur l'extrémité du tube de guidage (1) distante de la griffe (3) fixe, la butée étant disposée entre la tête polygonale (39) et un épaulement radial ou une bague d'appui (36) du tube de guidage (1), et n'étant sollicitée en traction que pendant les mouvements axiaux du coulisseau (29), dans le sens de détente.

7. Tendeur pour ressorts de compression suivant la revendication 1, caractérisé en ce que le coulisseau (29) et l'élément de douille (8) ont à peu près la même longueur axiale, et sont déportés mutuellement dans le sens axial, dans et/ou sur le tube de guidage (1), de telle sorte que le coulisseau (29), par rapport à l'extrémité côté tête polygonale du tube de guidage (1), présente une distance plus élevée que l'élément de douille (8), l'écart correspondant à peu près à la cote axiale (a) de la butée axiale (35) côté tête polygonale.

8. Tendeur pour ressorts de compression suivant la revendication 5, caractérisé en ce que la fente axiale (34) du tube de guidage (1) est ouverte côté frontal, sur l'extrémité munie de la griffe fixe (3).

9. Tendeur pour ressorts de compression suivant la revendication 1, caractérisé en ce qu'une griffe (3), réalisée sous forme d'anneau fermé avec un profil transversal en L, est prévue pour une fixation sélective, sur l'élément de douille (7) stationnaire du tube de guidage (1), notamment.


## Claims

1. A compression spring clamp, particularly for axle springs of motor vehicles, consisting of a cylindrical guide tube (1) with, rotatably mounted therein, a screw-threaded spindle (2) and two gripper clamps (3, 4), one gripper clamp being rigidly fixed at one end of the guide tube by means of a first sleeve part (7) which engages around the guide tube, while the other gripper clamp is attached to a second axially movable sleeve part (8) which engages with a sliding fit around the guide tube and which is connected by a radial finger (28) which traverses an axial slot (34) in the guide tube and which is open at one end, to a sliding block (29) guided for axial displacement on the inside surface of the guide tube and engaging the screw-threaded spindle via an internal screw thread, characterised in that the radial finger (28) which is integral with the sliding block (29) has a radial length (RL) measured from the outer surface of the complete diameter of the sliding block (29) and which corresponds at most to twice the wall thickness (d) of the guide tube (1) and which projects into a radial recess (27) in the sleeve part (8), the said recess engaging with minimal clearance around it in both axial directions and also in both directions of rotation.

2. A compression spring clamp according to Claim 1, characterised in that the recess (27) in the sleeve part (8), the radial finger (28) and the axial slot (34) in the guide tube (1) are disposed on the side facing the gripper clamps (3, 4), in the common plane (24) of symmetry of the guide tube (1) and the gripper clamps (3, 4).

3. A compression spring clamp according to Claim 1 or 2, characterised in that the recess (27) in the sleeve part (8) is disposed at least approximately in its axial centre.

4. A compression spring clamp according to one of Claims 1 to 3, characterised in that the sliding block (29) has a cylindrical middle portion (31) of tapering diameter and which projects in both axial directions beyond the radial finger (28).

5. A compression spring clamp according to one of Claims 1 to 4, characterised in that, at the end of the guide tube (1) which is provided with the fixed gripper clamp (3), the screw-threaded spindle (2) is by means of an integrally formed flange or a flange sleeve (42) screwed on and with its end face welded to it, mounted in an axial thrust bearing (45) which in the direction of pull of the threaded spindle is biased on a radial shoulder (46) of the guide tube (1).

6. A compression spring clamp according to Claim 4 or 5, characterised in that the screw-threaded spindle (2) has a key head (39) screwed and/or welded to it or integrally moulded onto it and is mounted at the end of the guide tube (1) which is remote from the fixed gripper clamp (3) in an axial thrust bearing (35) disposed between the key head (39) and a radial shoulder or a bracing ring (36) on the guide tube (1) and which is only subjected to a traction loading during the axial movements of the sliding block (29) which take place in the expansion direction.

7. A compression spring clamp according to Claim 1, characterised in that the sliding block (29) and the sleeve part (8) have approximately the same axial length and are disposed in an axial offset relationship to each other in or on the guide tube (1) so that the sliding block (29) is at a distance from the key head end of the guide tube (1) which is substantially greater than the sleeve part (8) by the axial dimension (a) of the key head end axial bearing (35).

8. A compression spring clamp according to Claim 5, characterised in that the axial slot (34) in the guide tube (1) is open at the end provided with the fixed gripper clamp (3).

9. A compression spring clamp according to Claim 1, characterised in that a gripper clamp (3) constructed as a closed ring with an L-shaped cross-sectional profile is provided for optional fixing, particularly on the fixed sleeve part (7) of the guide tube (1).

# FIG.1

# FIG.2

EP 0 349 776 B1

**FIG.3**

**FIG.4**

**FIG.5**

**FIG.6**

**FIG.7**